# EUROPEAN PATENT APPLICATION

(11) **EP 1 942 601 A1**
(43) Date of publication of application: **09.07.2008**
(21) Application number: 07123125.2
(22) Date of filing: 13.12.2007
(51) Int. Cl.: H04L 12/18, H04L 12/58

(54) **Device and method of expressing information in a communication message sent through a network**

(30) Priority: 29.12.2006 US 618711; 29.12.2006 HK 06114253
(71) Applicant: Union Creations Limited, Shatin, New Territories, Hong Kong SAR (CN)
(72) Inventor: Leung, Benson Wang Kai, Shatin, New Territories, Hong Kong SAR (CN)
(74) Representative: Beck & Rössig European Patent Attorneys

(57) **Abstract**

A method of expressing information contained in a communication message sent through a network from a sending party to a receiving party that includes receiving the incoming message, scanning the incoming communication message to identify pre-defined information therein, generating an operating message from the pre-defined information to control a functional component of an expressing device, and sending the operating message to the functional component. The pre-defined information is expressed by the functional component in a pre-configured mode that may include action, sound, light and images. The representation provided in the pre-defined Information in the communication message of the sending party is manifested by the expressing device of the receiving party.

## Description

### Technical Field

The present invention relates generally to the sending of communication messages, in particular, instant communication messages through the Internet.

### Background

Sending messages through the Internet by e-mail and instant messages are popular communication means nowadays. People have been attaching symbols, pictures and sound effects to the message text to make the communication more interesting and appealing. The symbols usually represent or reflect the emotion of the sender, for example :) represents happiness and :( represents sadness, referred to as emotional representation symbols. Another example is a knocking sound which informs the receiver that another party is on-line for instant message communication. Such add-on features are displayed on the computer screen or played on the speakers on the receiver's end.

A conventional computer is limited in its ability to provide animated expression since it typically has only a terminal base and a display screen. Although software designers have incorporated the above features on the computer so that animated visual and audio effects are displayed on the computer screen or played by the speakers, due to the limited functions of the terminal and screen, the user still perceives the computer as a mere communication and display machine. It will be more appealing if the user may relate the computer to a toy with animated features which is capable of giving expression or performing an action relating to some specific information provided by the sending party in the message, for example, the expression of an emotional representation symbol.

### Summary of the Invention

The object of the present invention is to provide a method of expressing a representation provided in a communication message sent through a network by a sending party to a computing device of a receiving party by an external expressing device, such that the representation is expressed in various modes including action, sound, light and images.

In accordance with the present invention, a method includes the following:
(a) receiving an incoming communication message;
(b) scanning the incoming communication message to identify pre-defined information therein;
(c) generating an operating message from the pre-defined information to control a functional component of an expressing device; and
(d) sending the operating message to the functional component.

The pre-defined information in the communication message is expressed by the functional component of the expressing device in a pre-configured mode, which may be in the form of action, sound, light and images. The representation provided in a communication message by a sending party is therefore manifested in a life-like manner by the expressing device of the receiving party.

Preferably, the user of the expressing device is allowed to set the pre-defined information and the corresponding reactions of the functional components.

Alternatively, the pre-defined information and the corresponding reactions are periodically updated through a network.

Yet in another embodiment, the pre-defined information is analyzed for detecting the emotion of the sending party.

The pre-defined information in the communication message may be the user status, the emotion representation, the symbols, some specific text or voice data.

In an embodiment, the functional component of the expressing device may be a motor for performing an action according to the pre-defined information.

In another embodiment, the functional component of the expressing device may be an audio output device for generating a sound effect or playing a sound clip according to the pre-defined information.

Yet in another embodiment, the functional component of the expressing device may be a display device for generating light or an image according to the pre-defined information.

### Brief Description of Drawings

The above and other aspects, features, and advantages of the present invention will become more apparent upon consideration of the following detailed description of preferred embodiments, taken in conjunction with the accompanying drawing figures, wherein:
Fig. 1 is a diagram of a system with an expressing device according to an embodiment of this invention;
Fig. 2a is a flow diagram illustrating a method of capturing a communication message according to an embodiment of this invention;
Fig. 2b is a flow diagram illustrating a method of capturing a communication message according to an embodiment of this invention;
Fig. 3 is a flow diagram illustrating the method of Fig. 1;
Figs. 4a and 4b show an interface according to an embodiment of this invention;
Fig. 4c shows an interface according to another embodiment of this invention;
Fig. 5 is a diagram illustrating the expressing device of Fig. 1; and
Fig. 6 is a diagram illustrating the expressing device according to another embodiment of this invention.

### Detailed Description of a Preferred Embodiment

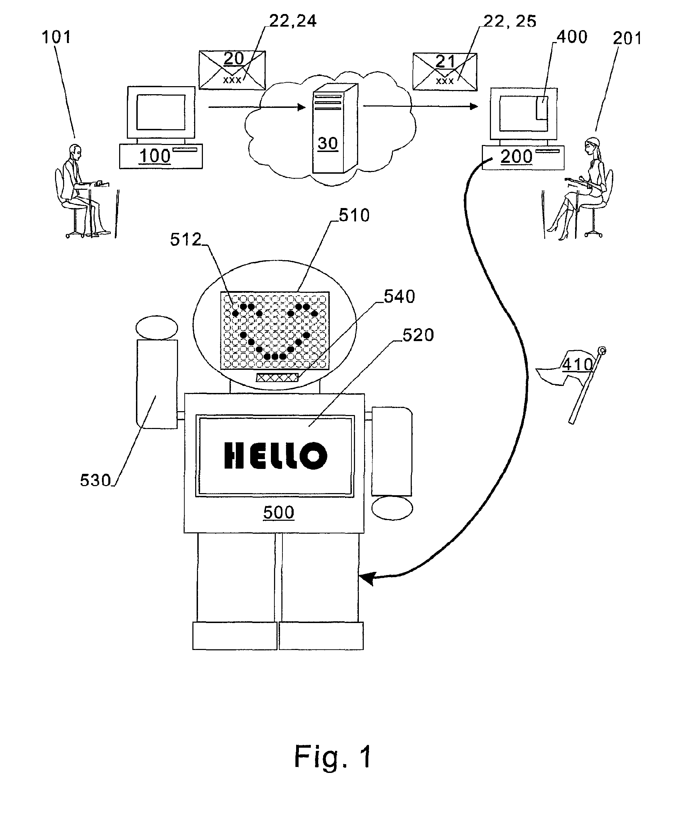

As illustrated in Fig. 1, during an instant message communication between a sending party [101] and a receiving party [201], a sender [100], being the computer of the sending party [101], sends a communication message [20] to a receiver [200], being the computer of the receiving party [201]. The communication message [20] from the sender [100] may contain a text portion [22] or a user status portion [24] informing the server [30] that the sender [100] is on-line and available for communication.

The communication message [20] is then processed at the server [30] and a communication message [21] containing the same text portion [22] or a user status portion [25] informing the receiver [200] that the sender [100] is on-line is sent to the receiver [200].

In some cases, the communication message [20] may be sent directly to the receiver [200] without passing through the server [30], for example, the chat-room function in some instantaneous message software.

A software program [400] is installed in the receiver [200] to generate an operating message [410] for controlling a functional component of an expressing device [500] according to the content of the communication message [21]. The expressing device [500] is an external device connected to the receiver [200] including functional components capable of performing action or vibration, producing sound or light effects, or displaying images. The functional components are pre-configured to respond in such reaction mode.

As shown in Fig. 1, by way of a non-limiting example, the expressing device [500] is a toy figure containing functional components such as a display device, motor-driven parts and an audio output device. By way of example, the display device includes an expression panel [510] and a text display panel [520]; the motor-driven part is a movable arm [530] and the audio output device is a speaker [540].

The expression panel [510] may be a panel of LEDs [512] arranged such that the LEDs [512] can be selectively turned on to show a face with various expressions. The text display panel [520] may be an LCD panel or a vacuum fluorescent display for displaying text. The arm [530] may be raised by a motor (not shown) disposed in the body of the expressing device [500]. The speaker [540] plays various sound effects or pre-recorded sound clips. The expressing device [500] may show a face, display text, raise its arm, generate sound or play a sound clip according to the content of the communication message [21] received by the receiver [200].

The display device may also be some other device which transmits light or image, for example a light bulb, an LCD or a vacuum fluorescent display. The audio output device may also be another device which produces sound, for example, a beeper, a buzzer, an electric bell or a headphone.

The receiver [200] receives packets [600] of various applications from the network, including the packet containing the incoming communication message [21]. The incoming communication message [21] may be captured from the packets [600] in the following two ways.

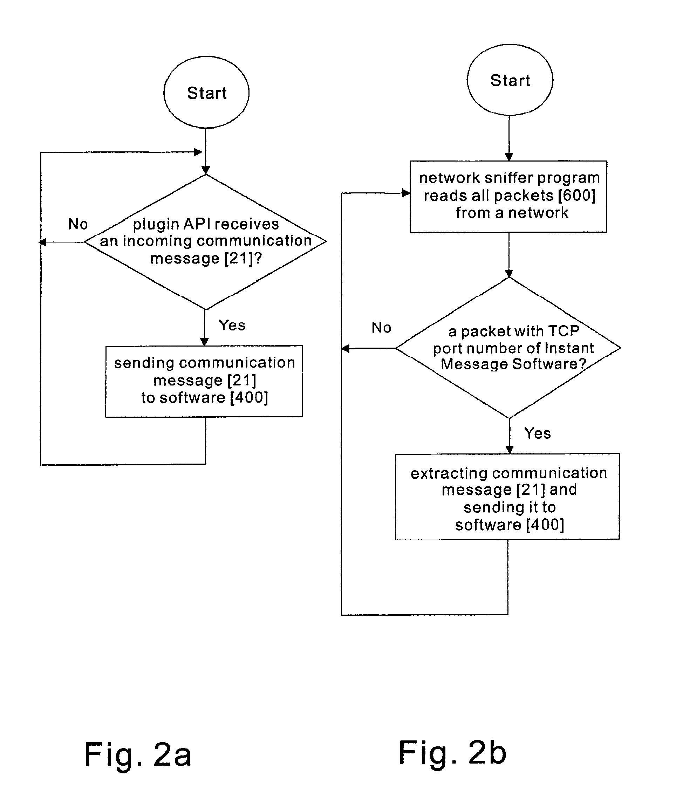

The first way is by using an existing plugin Application Programming Interface ("API") of an instantaneous message communication software, such as MSN add-in API, as illustrated in Fig. 2a. The API provides an incoming message event function such that when the API receives an incoming communication message [21], it will send the incoming communication message [21] to a subscriber of the incoming message event. The software [400] subscribes the incoming message event of the API. When the API receives an incoming communication message [21], it will send the incoming communication message [21] to the software [400]. The API of other communication software may also be applicable for capturing other forms of communication messages, for example, e-mail.

As different TCP port numbers are assigned to different instant message communication software, another way is to use a network sniffer program to capture all packets [600] with the TCP port numbers designating the corresponding instant message communication software, as illustrated in Fig. 2b. The network sniffer program reads all incoming packets [600] and extracts the communication message [21] of the relevant TCP port numbers from the packets. The extracted communication message [21] will then be sent to the software program [400].

The sending party [101] may be anyone having instant message communication with the receiving party [201]. The sending party [101] does not have to know that the receiving party [201] is using the expressing device [500]. The software program [400] scans the communication message [21] to search for the pre-defined information.

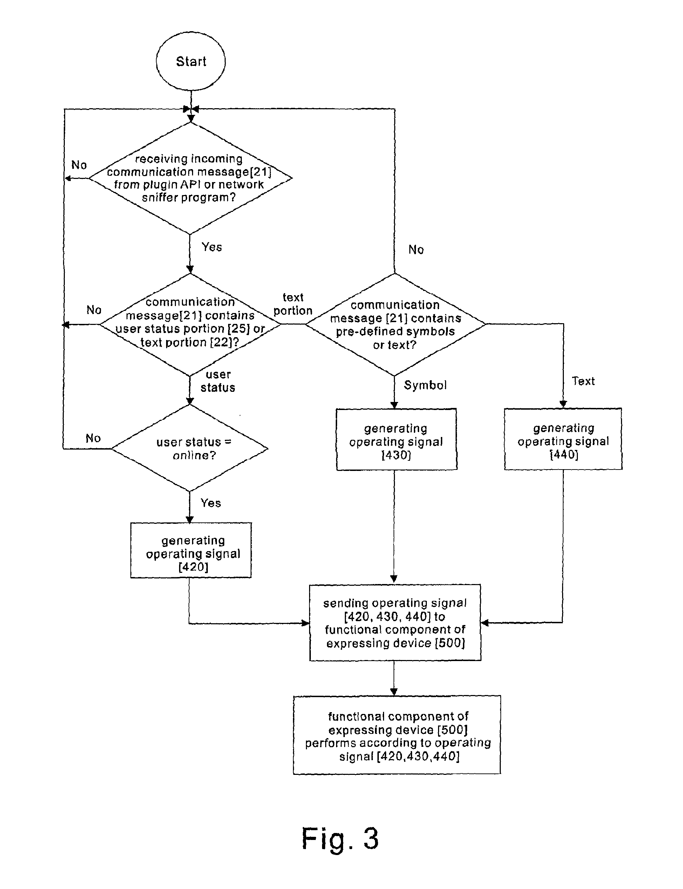

As illustrated in Fig. 3, the software program [400] detects whether the communication message [21] contains the text portion [22] or the user status portion [25] and whether such portions contain some pre-defined information. The pre-defined information is some representation provided by the sending party [101] of the communication message [21] usually in the form of text or symbols to express his thoughts, emotion or feelings. The pre-defined information may also be a user status portion [25] which represents that the sending party [101] of the communication message [21] is on-line.

By way of example, if the communication message [21] contains the user status portion [25] and the user status portion [25] indicates that the sending party [101] is on-line, the software program [400] will generate and send an operating message [420] to raise the arm [530] of the expressing device [500]. In this example, the on-line status is the pre-defined information.

If the communication message [21] contains the text portion [22], the software program [400] will scan the content of the text portion [22] and search for some pre-defined emotion representation, symbols and text.

By way of example, the pre-defined emotion representation and symbols are :) and :( and the pre-defined text is "Hello". If the software program [400] finds the emotion representation of :) or :(, for example, the software program [400] will send an operating message [430] to the expression panel [510] to show a smiling or a sad face by turning on the corresponding LEDs [512].

If the software program [400] spots the text of "Hello" in the text portion [22], for example, the software program [400] will send an operating message [440] to display "Hello" on the text display panel [520] and play the pre-recorded sound clip of "Hello" by the speaker [540]. In the above examples, the pre-defined information include the emotion representation and symbols of :) and :( and the text "Hello".

The operating message may be an operating signal for controlling the functional component of the expressing device [500]. The operating message may also contain some audio, video or graphic data to be played or displayed by the functional component.

The pre-defined information may contain other emotion representation, symbols and text. A particular combination of text and symbols may be pre-defined in a form of instruction language for controlling the functional components of the expressing device [500], for example the text "(a1b2)" may be defined as the instruction for raising the arm [530] for 1 second and showing a smiling face on the expression panel [510] for 2 seconds.

In another embodiment, the software program [400] allows the receiving party [201] to configure the corresponding reaction of the functional components of the expressing device [500] with respect to the pre-defined information already included in the software program [400]. The configured reaction may be a mode of action, sound, light, images or any combination of such modes, including the time period for performing such reaction. The software [400] provides an interface for the receiving party [201] to customize the corresponding reaction.

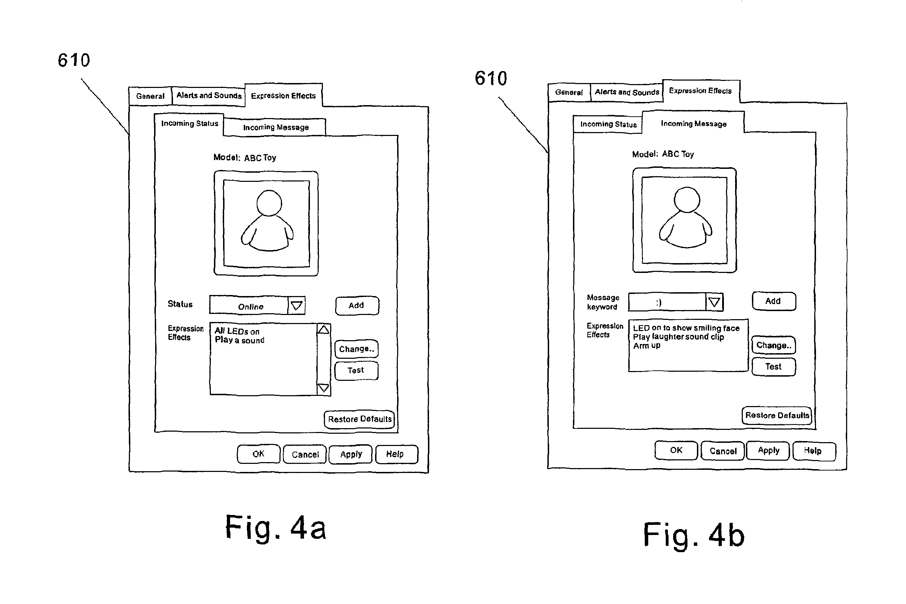

As shown in Fig. 4a, the receiving party [201] may configure the corresponding reaction of the functional components for expressing that the user status of the sender [100] is on-line on an interface [610]. In this example, when the sending party [101] is on-line, the software program [400] will generate the operating message to turn on all LEDs [512] of the expression panel [510] and play a pre-recorded sound clip by the speaker [540] informing the on-line status.

As shown in Fig. 4b, in another example, the receiving party [201] may configure the functional components with the interface such that when the symbol ":)" is detected in the communication message [21], the software program [400] will generate the operating message to turn on the LEDs [512] of the expression panel [510] to show a smiling face, to play a pre-recorded sound clip of laughter by the speaker [540] and to raise the arm [530] of the expressing device [500].

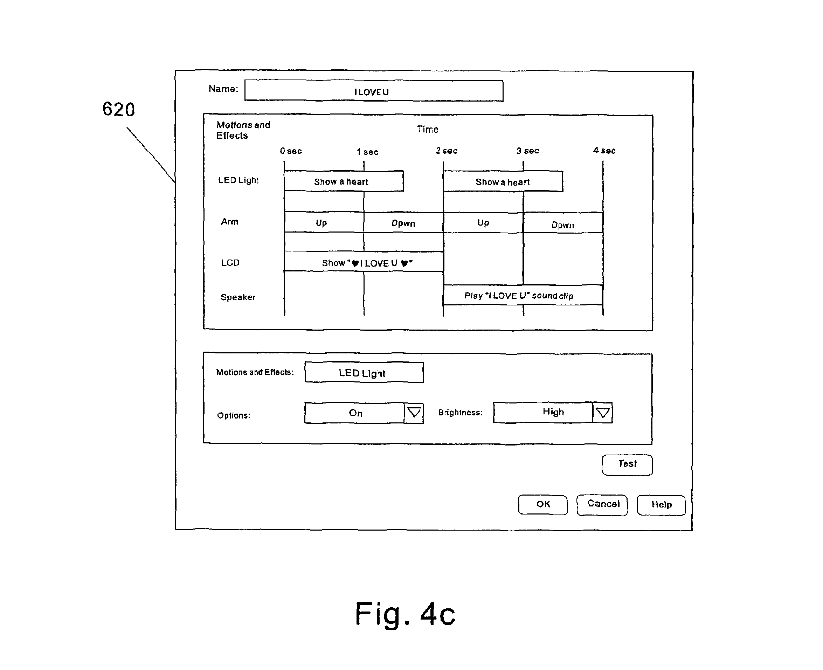

In another embodiment, an interface [620] is provided for the receiving party [201] to create his own set of pre-defined symbols and text, and to configure the corresponding reaction of the functional components of the expressing device [500]. As shown in Fig. 4c, by way of example, the software program [400] allows the receiving party [201] to configure the reaction of the expressing device [500] with respect to a pre-defined text "I LOVE U" using a time sequence table. In this example, the LEDs [512] of the expressing device [500] will be turned on to show a heart for 1.5 second and then off for 0.5 second, which is then repeated. At the same time, the motor will raise and lower the arm [530] of the expressing device [500] for a one-second period alternatively for four seconds. The text "I LOVE U" and two hearts will be displayed on the text display panel [520] for the first two seconds, and after that, an "I LOVE U" sound clip will be played by the speaker [540]. As such, the receiving party [201] may define the reactions of the functional components of the expressing device [500] at different time slots in a period of time.

In the above examples, the software program [400] will change a mapping table of the pre-defined information and the operating message according to the input of the receiving party [201] on the interface [610, 620].

To make it more entertaining for the receiving party [201], the pre-defined information or the corresponding reaction of the functional component may be periodically updated through a network. The receiving party [201] may download the corresponding reaction of the functional component, for example the audio, video or graphic data to be played or displayed, or the motion to be performed according to his preference.

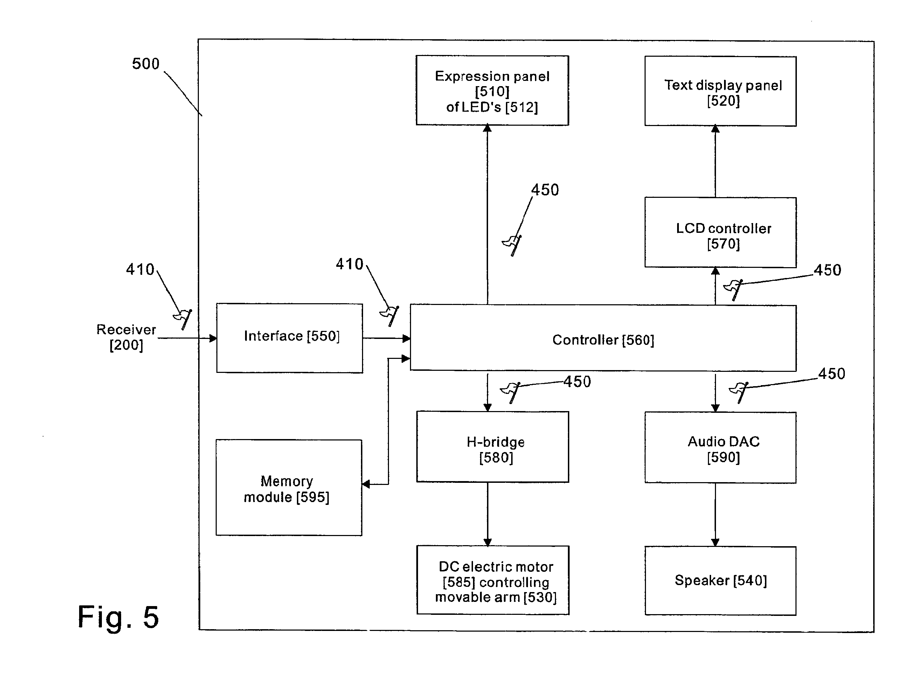

As illustrated in Fig. 5, the expressing device [500] contains an interface [550] for connecting with the receiver [200] and receiving operating message [410]. Preferably the interface [550] is a serial interface, a USB interface or a wireless interface. The interface [550] routes the operating message [410] to a controller [560] connected with a memory module [595]. The controller [560] reads the operating message [410] and generates a signal [450] to control the reaction of a functional component of the expressing device [500]. In this embodiment, the functional components include an expression panel [510], a text display panel [520], a movable arm [530] and a speaker [540].

The controller [560] sends instructing signals to turn on the LEDs [512] of the expression panel [510]. An LCD controller [570] is connected to the controller [560] for producing the instructing signals to operate the text display panel [520] to display the pre-configured text. An electronic circuit, for example an H-bridge [580], is connected to the controller [560] for controlling a DC electric motor [585]. The DC electric motor [585] is coupled to and controls the movement of the arm [530]. An audio DAC [590] converts the digital audio signals of the sound effect or the sound clip from the controller [560] to analog audio signals, and sends the analog signals to the speaker [540].

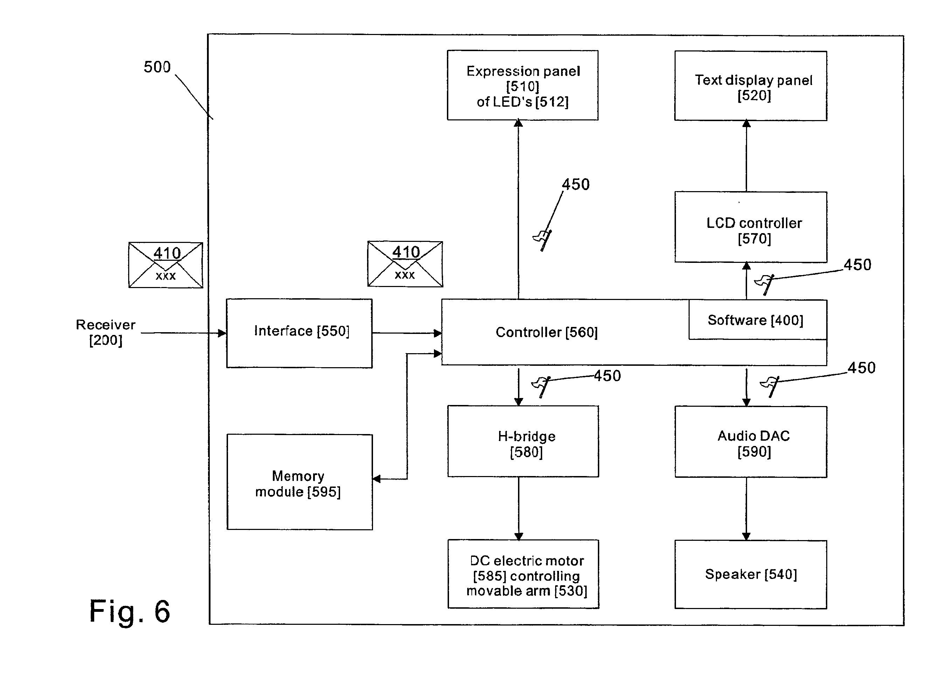

In another embodiment as illustrated in Fig. 6, the software program [400] may be loaded on the memory module [595] and executed on the controller [560] instead of running on the receiver [200]. The communication message [21] captured by the API or the network sniffer program is sent from the receiver [200] to the software program [400] executed on the controller [560]. The operating message [450] is sent from the software program [400] to the functional component according to the pre-defined information in the communication message [21].

The software program [400] may be provided in a computer readable medium such as a CD-rom or downloadable from the Internet. This invention is not restricted to the use of instant message communication, and may apply to any communication of messages through a network, for example, e-mail, cell phone messages or voice messages. Voice recognition software may be used to convert a voice message to a text message so that the pre-defined information can be detected from the text message. A Sensibility Technology emotion recognition engine may also be included in the voice recognition software for detecting the emotion of the speaker in a voice message by processing and analyzing the voice data. The pre-defined information in the communication message [21], for example, the text, may also be analyzed for detecting the emotion of the sending party [101], such that a corresponding reaction is performed to express the emotion to the receiving party [201].

While the invention has been described in detail with reference to disclosed embodiments, various modifications within the scope of the invention will be apparent to those of ordinary skill in this field. It is to be appreciated that features described with respect to one embodiment typically may be applied to other embodiments.

## Claims

1. A method of expressing information contained in a communication message sent through a network from a sending party to a receiving party, comprising:
(a) receiving the incoming communication message;
(b) scanning the incoming communication message to identify pre-defined information therein;
(c) generating an operating message from the pre-defined information to control a functional component of an expressing device; and
(d) sending the operating message to the functional component, wherein the pre-defined information is expressed by the functional component in a pre-configured mode comprising at least one of action, sound, light and image;
whereby a representation in the pre-defined information that the sending party provides in the communication message is manifested by the expressing device of the receiving party.

2. The method, as recited in claim 1, wherein operation (a) further comprises capturing the message from a plurality of packets.

3. The method, as recited in claim 1, between operation (a) and operation (b), further comprising analyzing the pre-defined information to detect the emotion of the sending party.

4. The method, as recited in claim 1, further comprising setting the pre-defined information and the corresponding pre-configured mode of the functional component of the expressing device of the receiving party.

5. The method, as recited in claim 1, wherein at least one of the pre-defined information and the corresponding pre-configured mode of the functional component is periodically updated through a network.

6. The method, as recited in claim 1, wherein the pre-defined information is selected from a group comprising user status, emotion representation, symbols, text and voice data.

7. A computer program product for expressing information contained in a communication message sent through a network from a sending party to a receiving party, including a software program loadable into the memory of a computing device, having a plurality of executable instruction codes for performing a method comprising:
(a) receiving the incoming communication message;
(b) scanning the incoming communication message to identify pre-defined information therein;
(c) generating an operating message from the pre-defined information to control a functional component of an expressing device; and
(d) sending the operating message to the functional component, wherein the pre-defined information is expressed by the functional component in a pre-configured mode comprising at least one of action, sound, light and image;
whereby a representation in the pre-defined information that the sending party provides in the communication message is manifested by the expressing device of the receiving party.

8. The computer program product as recited in claim 7, wherein operation (a) further comprises capturing the message from a plurality of packets.

9. The computer program product as recited in claim 7, wherein between operation (a) and operation (b), further comprising analyzing the pre-defined information to detect the emotion of the sending party.

10. The computer program product as recited in claim 7, further comprising setting the pre-defined information and the corresponding pre-configured mode of the functional component in response to an instruction by the receiving party.

11. The computer program product as recited in claim 7, wherein at least one of the pre-defined information and the corresponding pre-configured mode of the functional component is periodically updated through a network.

12. The computer program product as recited in claim 7, wherein the software program is downloadable through a network.

13. The computer program product as recited in claim 7, wherein the pre-defined information is selected from a group comprising user status, emotion representation, symbols, text and voice data.

14. A computer readable medium having a plurality of executable instruction codes for performing a method of expressing information contained in a communication message sent through a network from a sending party to a receiving party comprising:
(a) receiving the incoming communication message;
(b) scanning the incoming communication message to identify pre-defined information therein;
(c) generating an operating message from the pre-defined information to control a functional component of an expressing device; and
(d) sending the operating message to the functional component, wherein the pre-defined information is expressed by the functional component in a pre-configured mode comprising at least one of action, sound, light and image;
whereby a representation in the pre-defined information that the sending party provides in the communication message is manifested by the expressing device of the receiving party.

15. The computer program product as recited in claim 14, wherein operation (a) further comprises capturing the message from a plurality of packets.

16. The computer program product as recited in claim 14, wherein between operation (a) and operation (b), further comprising analyzing the pre-defined information to detect the emotion of the sending party.

17. The computer program product as recited in claim 14, further comprising setting the pre-defined information and the corresponding pre-configured mode of the functional component in response to an instruction by the receiving party.

18. The computer program product as recited in claim 14, wherein at least one of the pre-defined information and the corresponding pre-configured mode of the functional component is periodically updated through a network.

19. The computer readable medium as recited in claim 14, wherein the pre-defined information is selected from a group comprising user status, emotion representation, symbols, text and voice data.

20. An expressing device for expressing pre-defined information in a communication message sent through a network from a sending party to a receiving party, comprising:
an interface to receive an operating message from a computing device, wherein the operating message is generated according to the pre-defined information in the communication message to control a functional component of the expressing device;
a controller connected to the interface to provide an output signal to a functional component; and
at least one functional component connected to the controller pre-configured to operate in a mode comprising at least one of action, sound, light and image;
whereby a representation in the pre-defined information that the sending party provides in the communication message is manifested by the expressing device of the receiving party.

21. The expressing device as recited in claim 20, wherein the pre-defined information is selected from a group comprising user status, emotion representation, symbols, text and voice data.

22. The expressing device as recited in claim 20, wherein the functional component is a motor.

23. The expressing device as recited in claim 20, wherein the functional component is a display device selected from a group comprising a light bulb, an LED, an LCD and a vacuum fluorescent display.

24. The expressing device as recited in claim 20, wherein the functional component is an audio output device selected from a group comprising a speaker, a beeper, a buzzer, an electric bell and a headphone.

25. The expressing device as recited in claim 20, wherein the pre-defined information is selected from a group comprising user status, emotion representation, symbols, text and voice data.

26. A system to express information contained in a communication message sent through a network from a sending party to a receiving party, comprising:
a computer program product including a software program loadable into the memory of a computing device, having a plurality of executable instruction codes for performing a method comprising:
(a) receiving the incoming communication message;
(b) scanning the incoming communication message to identify pre-defined information therein;
(c) generating an operating message from the pre-defined information to control a functional component of an expressing device; and
(d) sending the operating message to the functional component, wherein the pre-defined information is expressed by the functional component in a pre-configured mode comprising at least one of action, sound, light and image; and
an expressing device to express the pre-defined information, comprising:
an interface to receive an operating message from a computing device;
a controller connected to the interface to provide an output signal to a functional component; and
at least one functional component connected to the controller pre-configured to operate in a mode comprising at least one of action, sound, light and image;
whereby a representation in the pre-defined information that the sending party provides in the communication message is manifested by the expressing device of the receiving party.

27. A system to express information contained in a communication message sent through a network from a sending party to a receiving party, comprising:
a computer readable medium having a plurality of executable instruction codes for performing a method comprising:
(a) receiving the incoming communication message;
(b) scanning the incoming communication message to identify pre-defined information therein;
(c) generating an operating message from the pre-defined information to control a functional component of an expressing device;
(d) sending the operating message to the functional component, wherein the pre-defined information is expressed by the functional component in a pre-configured mode comprising at least one of action, sound, light and image; and
an expressing device to express the pre-defined information, comprising:
an interface to receive an operating message from a computing device;
a controller connected to the interface to provide an output signal to a functional component; and
at least one functional component connected to the controller and pre-configured to operate in a mode comprising at least one of action, sound, light and image;
whereby a representation in the pre-defined information that the sending party provides in the communication message is manifested by the expressing device of the receiving party.

28. An expressing device to express pre-defined information in a communication message sent through a network from a sending party to a receiving party, comprising:
an interface to receive the incoming communication message;
a controller connected to the interface to provide an output signal to a functional component; and
at least one functional component connected to the controller pre-configured to operate in a mode comprising at least one of action, sound, light and image,
wherein a software program is executable on the controller, having a plurality of executable instruction codes to perform a method comprising:
(a) receiving the incoming communication message;
(b) scanning the incoming communication message to identify pre-defined information therein;
(c) generating an operating message from the pre-defined information to control a functional component of an expressing device; and
(d) sending the operating message to the functional component, wherein the pre-defined information is expressed by the functional component in a pre-configured mode comprising at least one of action, sound, light and image;
whereby a representation in the pre-defined information that the sending party provides in the communication message is manifested by the expressing device of the receiving party.
